(19) Europäisches Patentamt
European Patent Office
Office européen des brevets

(11) **EP 2 377 062 B1**

(12) **EUROPÄISCHE PATENTSCHRIFT**

(45) Veröffentlichungstag und Bekanntmachung des Hinweises auf die Patenterteilung:
**04.04.2018 Patentblatt 2018/14**

(21) Anmeldenummer: **09748792.0**

(22) Anmeldetag: **10.11.2009**

(51) Int Cl.:
*G06F 21/60* (2013.01)     *G06F 21/72* (2013.01)
*G07F 19/00* (2006.01)     *G06Q 20/38* (2012.01)
*H04L 9/08* (2006.01)

(86) Internationale Anmeldenummer:
**PCT/EP2009/064882**

(87) Internationale Veröffentlichungsnummer:
**WO 2010/066522 (17.06.2010 Gazette 2010/24)**

(54) **SYSTEM UND VERFARHREN FÜR EINE GESICHERTE KOMMUNIKATION VON KOMPONENTEN INNERHALB VON SB-AUTOMATEN**

SYSTEM AND METHOD FOR SECURE COMMUNICATION OF COMPONENTS WITHIN VENDING MACHINES

SYSTÈME ET PROCÉDÉ GARANTISSANT UNE COMMUNICATION SÛRE ENTRE LES COMPOSANTS INTERNES DE DISTRIBUTEURS AUTOMATIQUES LIBRE-SERVICE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **09.12.2008   DE 102008060863**

(43) Veröffentlichungstag der Anmeldung:
**19.10.2011   Patentblatt 2011/42**

(73) Patentinhaber: **Wincor Nixdorf International GmbH**
**33106 Paderborn (DE)**

(72) Erfinder:
• **KRUMMEL, Volker**
**33098 Paderborn (DE)**
• **NOLTE, Michael**
**33034 Brakel (DE)**
• **RUNOWSKI, Matthias**
**33154 Salzkotten (DE)**

(56) Entgegenhaltungen:
**EP-A1- 1 612 747     US-B1- 6 789 730**

• **"Chapter 9: ED - MENEZES A; OORSCHOT VAN P; VANSTONE S" [Online] 1. Oktober 1996 (1996-10-01), HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 321 - 383 , XP001525009 ISBN: 9780849385230 Gefunden im Internet: URL:http://www.cacr.math.uwaterloo.ca/hac/ > Section 9.1 Section 9.5 Section 9.6**
• **Andrew S. Tanenbaum: "Computer Networks, Fourth Edition" 9. August 2002 (2002-08-09), Prentice Hall , XP002565530 ISBN: 9780130661029 , Seiten 161-188 Seite 161 Abbildung 3.17**
• **DIERKS INDEPENDENT E RESCORLA RTFM T ET AL: "The Transport Layer Security (TLS) Protocol Version 1.2; rfc5246.txt" THE TRANSPORT LAYER SECURITY (TLS) PROTOCOL VERSION 1.2; RFC5246.TXT, INTERNET ENGINEERING TASK FORCE, IETF; STANDARD, INTERNET SOCIETY (ISOC) 4, RUE DES FALAISES CH- 1205 GENEVA, SWITZERLAND, 1. August 2008 (2008-08-01), XP015060256**

**Beschreibung**

Die Erfindung betrifft ein System und ein Verfahren zur Absicherung der Kommunikation von Komponenten innerhalb von Selbstbedienungs-Automaten (SB- Automaten) insbesondere von Geldautomaten.

Gebiet der Erfindung:

Selbstbedienungs (SB)-Automaten weisen oftmals eine Reihe von Komponenten auf, die miteinander zu verbinden sind. In der Regel weisen diese Automaten eine standardisierte PC-Plattform auf, die besonderen Sicherheits-Anforderungen gerecht wird. An dieser PC-Plattform (Motherboard) werden, z.B. über USB-Schnittstellen, Tastaturen, Geldausgabe-Automaten, Kartenlesegeräte, Monitore und andere Geräte angeschlossen.

Weiterhin umfassen diese Automaten die Möglichkeit, sich mit einem anderen Computer zu verbinden, damit sich zum Beispiel ein Wartungs-Ingenieur mit seinem Laptop mit dem SB-Automat verbinden kann.

Ein solcher Fall ist zum Beispiel dann gegeben, wenn der Ingenieur die Geldausgabeeinheit testen möchte. Mit einem Testprogramm, das auf dem Laptop installiert ist, kann er sich mit der Ausgabeeinheit verbinden, um dann Geldnoten zu Testzwecken auszugeben. Des Weiteren sind Fälle bekannt, in denen Personen diese Technologie nutzen, um sich unerlaubt Bargeld zu verschaffen. Letzteres wird erreicht, indem physikalische Sicherheitsmechanismen umgangen werden oder manipuliert werden.

Weiterhin sind sicherheitskritische Fälle bekannt, in denen sich eine Person mit einem USB-Tracer(eine Vorrichtung, die den Verkehr auf der USB Schnittstelle belauscht) auf die Leitung der Ausgabeeinheit und des PCs schaltet, mit dem Ziel, Steuerkommandos zu analysieren, zu manipulieren und gelauschte Kommandos wieder ein zu steuern, um sich so unerlaubt Bargeld zu verschaffen. Des Weiteren sind Fälle bekannt, in denen sich eine Person mit einem USB-Tracer zwischen die Leitung des Kartenlesers und des PCs schaltet, um sich unerlaubt Kartendaten zu verschaffen.

Die EP 1612747, Chapter 9:ED-MenezesA;OORSCHOT VAN P; VANSTONE S" Handbook of applied cryptorgrapny ISBN 9780849385230; Andrew S Tannenbaum "Computer Networks Foruth Edition" ISBN 9780130661029, Dierks independent e rescorla rtfm t et al: "The Transport Layer Security (TLS) Protocol Version 1.2; rfc5246.txt" , US 6 789 730B1 behandeln die Verschlüsselung im Bereich der Computer und die sichere Datenübertragung.

Grundsätzlich ist die vorliegende Erfindung nicht auf USB beschränkt, jedoch handelt es sich bei USB um einen dominanten Standard für Peripheriegeräte bei Computern, so dass im Folgenden im Wesentlichen auf USB eingegangen wird. Es ist jedoch zu beachten, das alle anderen Verbindungsstandards, die ebenfalls kabellos sein können, und ein ähnliches Konzept wie USB verfolgen, durch die Erfindung abgedeckt sein sollen.

USB ist ein bitserieller Bus, die einzelnen Bits des Datenpaketes werden also nacheinander übertragen. Die Datenübertragung erfolgt symmetrisch über zwei verdrillte Leitungen, die eine überträgt das Datensignal unverändert, die andere das invertierte Signal. Der Signalempfänger bildet die Differenzspannung beider Signale; der Spannungshub zwischen 1- und 0-Pegeln ist dadurch doppelt so groß, eingestrahlte Störungen werden weitgehend eliminiert. Das erhöht die Übertragungssicherheit, unterdrückt Gleichtaktstörungen und verbessert damit die elektromagnetische Verträglichkeit. Zwei weitere Leitungen dienen zur Stromversorgung der angeschlossenen Geräte. Durch die Verwendung von nur vier Adern in einem Kabel können diese dünner und preiswerter als bei parallelen Schnittstellen ausgeführt werden. Eine hohe Datenübertragungsrate ist mit relativ geringem Aufwand zu erreichen, da nicht mehrere Signale mit identischem elektrischem und zeitlichem Verhalten übertragen werden müssen.

Die Bus-Spezifikation sieht einen zentralen Host-Controller (Master) vor, der die Koordination der angeschlossenen Peripherie-Geräte (den sog. Slave-Clients) übernimmt. Daran können theoretisch bis zu 127 verschiedene Geräte angeschlossen werden. An einem USB-Port kann immer nur ein USB-Gerät angeschlossen werden. Wenn an einem Host mehrere Geräte angeschlossen werden sollen, muss deshalb ein Verteiler (Hub) für deren Kopplung sorgen. Durch den Einsatz von Hubs entstehen Baumstrukturen, die alle im Host-Controller enden.

Trotz seines Namens - Universal Serial Bus - ist der USB kein physischer Datenbus. Bei einem solchen werden mehrere Geräte parallel an eine Leitung angeschlossen. Die Bezeichnung "Bus" bezieht sich auf die logische Vernetzung, die tatsächliche elektrische Ausführung erfolgt nur mit Punkt-zu-Punkt-Verbindungen.

Zur Verwaltung von Informationen und Daten, die über den USB Bus übertragen werden dient ein USB-Stack, auf dem dann die entsprechenden USB Treiber der Geräte aufsetzen. Der USB-Stack ist für die Zuordnung der Informationen zu den einzelnen Gerätetreibern zuständig.

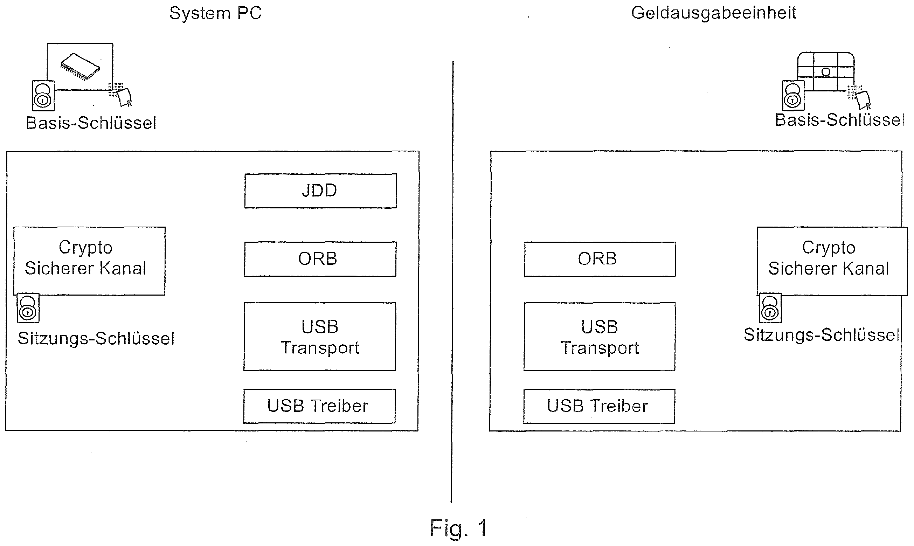

Die Figur 1 zeigt einen solchen Schichtaufbau bei zwei Geräten. Die linke Spalte stellt den Schichtaufbau bei einem System PC dar, der im wesentlichen den Geldautomaten steuert. Das RM3 Gerät ist ein Peripheriegerät, das, z.B. über einen USB Bus, mit dem System PC verbunden ist. Dieses Peripheriegerät kann z.B. eine Geldausgabeautomat oder ein Kartenlesegerät sein, in dem ebenfalls wiederum ein Betriebssystem angeordnet ist, das die USB-Schnittstelle verwaltet. Zu erkennen ist, dass der System PC über eine JDD (Java Device Driver)- Schicht verfügt, die für das Laden der Treiber verantwortlich ist. Darunter ist ein Objekt Request Broker (ORB) angeordnet. Unter diesem ist dann die USB Transportschicht angesetzt, die wiederum auf dem USB Treiber aufsetzt.

Es ist zu beachten, dass die USB-Technologie keinerlei Sicherheitsfunktionen aufweist, so dass die oben beschriebenen Manipulationen auftreten können.

Überblick über die Erfindung:

Aufgabe der vorliegenden Erfindung ist es, die Sicherheit eines Verbindungskanals, der eine Hauptsteuerungseinheit (PC Modul)mit Peripheriegeräten verbindet, zu gewährleisten.

Konkret wird die Authentizität und die Vertraulichkeit von Nachrichten auf diesem Kanal mit einem kombinierten Verfahren realisiert. Ferner ist es Aufgabe eine Fehlertoleranz bereitzustellen und das Wiedereinspielen alter Nachrichten zu verhindern.

Gelöst wird diese Aufgabe durch eine Vorrichtung und ein Verfahren mit den Merkmalen der unabhängigen Ansprüche.

Weitere vorteilhafte Ausführungsformen finden sich in den Unteransprüchen.

Im Einzelnen handelt es sich um Verfahren zur Absicherung der Kommunikation von Komponenten innerhalb von Selbstbedienungs-Automaten, die über ein Bussystem miteinander verbunden sind. Solche Komponenten können die Hauptplatine sein (in der Regel ein PC basiertes Motherboard), der Kartenleser, die Tastatur, das Geldausgabesystem, Bildschirm etc. Grundsätzlich unterscheidet man zwischen einer aktiven Komponente (Sender) und einer passiven Komponente (Empfänger). Diese Komponenten sind vorzugsweise durch ein serielles Bus-System, wie den USB-Bus, verbunden. Es soll natürlich keine Beschränkung bzgl. des Bussystems gegeben sein. Es können sowohl kabellose als auch kabelgebundene Bussysteme verwendet werden. Beim USB-Bussystem z.B. ist eine Verschlüsselung durch den Standard nicht vorgegeben, so dass diese auf der Transportebene des Bussystems zu erfolgen hat. Hierbei werden die Daten als Tupel *(C,A,R,N,Z)* ausgetauscht. Wobei das Tupel als binärer Record in unterschiedlicher Form ausgebildet sein kann. Es können die Daten auch in unterschiedlicher Reihenfolge oder in getrennten Paketen gesendet werden. Das Tupel soll lediglich die logische Zusammengehörigkeit ausdrücken. Bei diesem Tupel sind *C* die mit einem Verschlüsselungsschlüssel verschlüsselten Nachrichtendaten *M*, *A* sind die mit einem Authentifizierungsschlüssel authentifizierten Nachrichtendaten M, *R* stellt die Rolle einer Komponente auf dem Bussystem als aktiver oder passiver Teilnehmer dar (Sender oder Empfänger), *N* stellt einen Nachrichtenzähler dar, *Z* stellt einen Sitzungszähler dar. Der Sitzungszähler hat die Funktion, dass regelmäßig für eine neue Sitzung der Schlüssel geändert wird. Für die Realisierung können bekannte Algorithmen auf beiden Seiten verwendet werden. Beispiele aus dem Stand der Technik sind:

AES, DES und beliebige andere Blockchiffren in entsprechenden Betriebsmodi. Details hierzu sind dem Fachmann bekannt In einer weiteren Ausführungsform wird das oben genannte Tupel erweitert, so dass es nun lautet *(C,A,R, N,Z,$\tilde{N},\tilde{Z}$ )*, wobei $\tilde{N}$ ein Nachrichtenzähler der $\Delta$-letzten Nachrichten N ist, $\tilde{Z}$ ein letzter *Sitzungszähler* der $\Delta$-letzten Nachrichten. Durch $\Delta$ kann bestimmt werden, dass die letzten Nachrichten bei der Übertragung verloren gehen dürfen, ohne dass die darüber liegende Anwendungsschicht darüber informiert werden muss. Dabei merkt sich der Sender eines Kanals die Sitzungsnummer $\tilde{Z}$ und Nachrichtennummer $\tilde{N}$ der letzen $\Delta$-letzten Nachrichten und schickt in jeder Nachricht zusätzlich zum Paar (N,Z) als aktuellen Sitzungszähler auch das Paar ($\tilde{Z}$  $\tilde{N}$) mit, so dass eine Überprüfung beim Empfänger ermöglicht wird. Wenn nun weniger als $\Delta$-Nachrichten verloren gegangen sind, wird keine Fehlermeldung erzeugt. Dies ist immer dann möglich, wenn Redundanzen bei der Datenübertragung gegeben sind. Das $\Delta$ kann als Parameter, z.B. von der darüberliegenden Schicht, eingestellt werden. Ein Verlust von Informationen kann z.B. dann erfolgen, wenn Kabel herausgezogen werden, oder andere Manipulationen an der Verbindung vorgenommen werden.

Die Sicherheitsmechanismen basieren auf einem Schlüssel für die Authentifizierung und einem Schlüssel für die Verschlüsselung. Hierbei werden Schlüssel verwendet die bei der Herstellung und beim Zusammenbau des Selbstbedienungs-Automaten erzeugt werden und sicher in den Komponenten abgelegt werden.

Die Schlüssel können z.B. in einem Trusted Platform Modul (TPM) abgelegt werden, wie es auf dem Markt bekannt ist. Das Trusted Platform Module (TPM) ist ein Chip, der als Teil der TCG-Spezifikation (vorher TCPA) Computer oder andere Geräte, die die Befehle des TPM ausführen können, beschränkt. Dies dient beispielsweise den Zielen des Lizenzschutzes und des Datenschutzes. Der Chip entspricht einer fest eingebauten Smartcard mit dem wichtigen Unterschied, dass er nicht an einen konkreten Benutzer (Benutzer-Instanz), sondern an einen einzelnen Computer (Hardware-Instanz) gebunden ist. Außer der Verwendung in PCs kann das TPM in PDAs, Mobiltelefonen und Unterhaltungselektronik integriert werden. Ein Gerät mit TPA kann nicht mehr durch Software, die die Befehle des TPM ausführt, entgegen den Interessen der Hersteller der Hardware, der Vertreiber der Lizenzen oder der Eigentümer von Daten genutzt werden. Ein Vorteil für den einzelnen Nutzer eines Computers ist außer im Schutz gegen Missbrauch durch Unbefugte Dritte nicht definiert.

Der Chip ist passiv und kann weder den Bootvorgang noch den Betrieb direkt beeinflussen. Er enthält eine eindeutige Kennung und dient damit zur Identifizierung des Rechners.

Es ist möglich, dass zum Ausführen von bestimmten Anwendungen ein aktiviertes TPM vorausgesetzt wird.

Die Authentifizierung erfolgt auf der Basis eines bekannten Authentifizierungsalgorithmus durch $A := Auth[K^R_{auth}, N, M, |M|]$, wobei $K^R_{auth}$ Ergebnis eines sicheren Schlüsselerzeugungsverfahrens mit einem gemeinsamen Schlüssel K ist, und

$c := ENC[K^R_{enc}, Z, N, M]$, wobei $K^R_{enc}$ Ergebnis eines

Schlüsselerzeugungsverfahrens mit einem gemeinsamen Schlüssel K ist. In der bevorzugten Ausführungsform werden diese durch eine Hash-Funktion bestimmt. Details hierzu finden sich weiter unten.

Zur Sicherstellung, dass keinerlei Daten verloren gehen, wird ein Nachrichtenzähler eingesetzt, der bei jedem Senden hoch gesetzt wird bis zu einer vorgegebenen natürlichen Zahl.

Im Einzelnen sollen beim Senden folgende Schritte durchgeführt werden, prüfen ob der Nachrichten-Zähler $N < N_{max}$, falls dies gegeben ist, setzen $N := N+1$.

Beim Empfangen werden folgende Schritte durchgeführt, unter Annahme dass der letzte Sitzungszähler $\overline{Z}$ und der letzte Nachrichtenzähler $\overline{N}$ ist.

- Prüfen, ob Sitzungsaummer $Z \leq Z_{max}$,
- Prüfen, ob Nachrichtennummer $N \leq N_{max}$
- Vergleichen der Tupel $(\hat{Z}, \hat{N})$ und $(\overline{Z}, \overline{N})$, sind mehr als $\Delta$ Nachrichten verloren gegangen, wird ein Fehler erzeugt, ansonsten,
- Durchführen einer Entschlüsselung
- Durchführen einer Authentifizierung

Beim Empfänger wird die Entschlüsselung wie folgt durchgeführt $M' := DEC[K^R_{dec}, C];$ die Authentifizierung ist gegeben, wenn A=A' wobei $A' := Auth[K^R_{ver}, N, M', |C|],$

Das Verfahren kann bei Selbstbedienungs-Automaten-Komponenten eingesetzt werden, die oben erwähnt wurden, wobei die Komponente sowohl der Empfänger als auch der Sender sein kann. In der Regel ist die Kommunikation bidirektional, so dass Empfänger und Sender beide Aufgaben übernehmen.

Figurenbeschreibung:

Die Figuren zeigen mögliche Ausführungsformen, die nicht beschränkend zu bewerten sind, sondern lediglich das Verständnis der Erfindung verbessern sollen. Es zeigt

Fig. 1 den Schichtenaufbau von zwei SB-Komponenten, hierbei handelt es sich einerseits um einen System PC und andererseits um ein Kartenlesegerät RM3;

Fig. 2 zeigt die Kommunikation der Geräte aus Fig. 1 über die Schichten der Software

Fig. 3 zeigt die Kommunikation über das Bussystem USB

Fig. 4 zeigt die verschlüsselte Kommunikation über das Bussystem

Fig. 5 zeigt die Schritte beim Erzeugen des gemeinsamen Schlüssels bei der Inbetriebnahme des PC-Motherboards und der Ablage im TPM

Fig. 6 zeigt die Schritte der Fig. 5 für den Kartenleser

Fig. 7 zeigt die Initialisierung der Schlüssel zwischen dem Kartenleser und dem PC.

Ausführungsform:

Zum besseren Verständnis wird das Verschlüsselungsmodell im Detail im Folgenden beschrieben.

Im ersten Schritt erfolgt eine Beschreibung der Bezeichner bzw. Variablen für das Protokoll Sicherer- Kanal:

| | | |
|---|---|---|
| | *A, B* | Teilnehmer des Protokolls |
| | $R \in \{A, B\}$ | Bezeichner des aktiven Protokollteilnehmers |
| | $R' \in \{A, B\} \setminus \{R\}$ | Bezeichner des passiven Protokollteilnehmers |
| | $N_{max}$ | Maximale Anzahl der Nachrichten pro Sitzung |
| | $Z_{max}$ | Maximale Anzahl der Sitzungen |
| | HASH [.] | Kryptographisch sichere Hashfunktion beispielsweise SHA 1, SHA 256, MD5, etc |
| | AUTH [.] | Kryptographisch sichere Nachrichtenauthentisierung zum Beispiel mittels HMAC, CBC MAC ISO9797-1 |
| | ENC [.] | Kryptographisch sicheres Verschlüsselungsverfahren zum Beispiel mittels AES, DES, |
| | *K* | Gemeinsamer, langlebiger Schlüssel von *A* und *B* |
| | $A \rightarrow B$ | Sitzung, in der *A* Nachrichten an *B* schickt |
| | $B \rightarrow A$ | Sitzung, in der *B* Nachrichten an *A* schickt |
| | $Z^{A}_{A \rightarrow B}$ | Sitzungszähler von *A* der Sitzung $A \rightarrow B$ (persistent) |
| | $Z^{A}_{B \rightarrow A}$ | Sitzungszähler von *A* der Sitzung $B \rightarrow A$ (persistent) |
| | $Z^{B}_{A \rightarrow B}$ | *Sitzungszähler* von *B* der Sitzung $A \rightarrow B$ (persistent) |
| | $Z^{B}_{B \rightarrow A}$ | Sitzungszähler von *B* der Sitzung $B \rightarrow A$ (persistent) |
| | $N^{A}_{A \rightarrow B}$ | Nachrichtenzähler von *A* der Sitzung $A \rightarrow B$ |
| | $N^{B}_{A \rightarrow B}$ | Nachrichtenzähler von *B* der Sitzung $A \rightarrow B$ |
| | $N^{A}_{B \rightarrow A}$ | Nachrichtenzähler von *A* der Sitzung $B \rightarrow A$ |
| | $N^{B}_{B \rightarrow A}$ | Nachrichtenzähler von *B* der Sitzung $B \rightarrow A$ |
| | $\Delta \in N$ | tolerierte Länge einer Sequenz von Nachrichten, die ihren Empfänger nicht erreichen |

Funktionen können aus dem RC4-Algorithmus, Temporal Key Integrity Protocol, MD2, MD4, MD5, SHA, RIPEMD-160, Tiger HAVAL Whirlpool, LM-Hash NTLM entnommen werden (Hash). Als Verschlüsselungsverfahren können z.B. RSA, AES, etc. verwendet werden.

Grundsätzlich gibt es eine Abhängigkeit der Daten.

Nachdem alle gesendeten Nachrichten vom Sender *A* bei dem jeweiligen Empfänger *B* angekommen sind, sollten folgende Bedingungen gelten:

$$
\begin{array}{ccc}
A & & B \\
\hline
K & & K \\
Z^{A}_{A \rightarrow B} & = (\geq) & Z^{B}_{A \rightarrow B} \\
Z^{A}_{B \rightarrow A} & = (\leq) & Z^{B}_{B \rightarrow A} \\
N^{A}_{A \rightarrow B} & = (\geq) & N^{B}_{A \rightarrow B} \\
N^{A}_{B \rightarrow A} & = (\leq) & N^{B}_{B \rightarrow A}
\end{array}
$$

Diese Tabelle bedeutet, dass der gemeinsame Schlüssel identisch ist, der Sitzungszähler gleich oder größer ist. Wenn Pakete verloren gehen oder wenn er gerade hochgezählt wurde, so kann der Sitzungszähler größer sein, das gleiche gilt für den Nachrichtenzähler. Grundsätzlich sind zwei Fälle zu unterscheiden. Im ersten Fall ist ein Paketverlust nicht erlaubt (also $\Delta = 0$) im zweiten Fall ist ein Paketverlust aufgrund der Redundanz erlaubt ($\Delta \geq 0$)

Fall $\Delta = 0$

Zuerst wird ein gemeinsamer Sitzungsschlüssel berechnet Eingabe: gemeinsamer Schlüssel $K$, Rolle $R \in \{A,B$, Sitzung $S \in \{'A \to B','B \to A'\}$, Sitzungszähler $Z_S^R$

$$KS_S^R := HASH\ [K,\ 'ENC',\ S,\ Z_S^R]$$

$$KA_S^R := HASH\ [K,\ 'AUTH',\ S,\ Z_S^R]$$

Falls $R = A$ und $S = 'A \to B'$

1. $K_{enc}^A := KS_S^R$
2. $K_{auth}^A := KA_S^R$

Falls $R = A$ und $S = 'B \to A'$

1. $K_{dec}^A := KS_S^R$
2. $K_{ver}^A := KA_S^R$

Falls $R = B$ und $S = 'A \to B'$

1. $K_{dec}^B := KS_S^R$
2. $K_{ver}^B := KA_S^R$

Falls $R = B$ und $S = 'B \to A'$

1. $K_{enc}^B := KS_S^R$
2. $K_{auth}^B := KA_S^R$

Beim Starten einer neuen Sitzung ist folgendes zu berücksichtigen
Eingabe: gemeinsamer Schlüssel $K$, Rolle $R \in \{A,B\}$,
Sitzung $S \in \{'A \to B','B \to A'\}$, (d.h. Daten von A in Richtung B und umgekehrt) neuer Sitzungszähler $Z$

1. $Z_S^R := Z\ ||\ default\ Z = Z_S^R + 1$
2. Sitzungsschlüssel berechnen
3. $N_{R \to R'}^R := 0$

Nachricht verschicken:

Eingabe: Nachricht $M$, Rolle $R \in \{A, B\}$, Nachrichtenzähler $N_{R \to R'}^R$, Sitzungszähler $Z_{R \to R'}^R$

1. prüfe Nachrichtenzähler $N_{R \to R'}^R < N_{max}$
2. erhöhe Nachrichtenzähler $N_{R \to R'}^R := N_{R \to R'}^R + 1$

3.  .. ..

4. $N := N_{R \to R'}^R$

5. $A := \text{AUTH } [K_{auth}^R, N, M, |M|]$

6. $C := \text{ENC } [K_{enc}^R, N, M]$

7. sende (*C, A, R, N, Z*)

Nachricht empfangen:

Eingabe: Chiffretext *C*, Authentisierung *A*, Rolle $R \in \{A, B\}$, Nachrichtennummer *N*,

Sitzungsnummer *Z*, Nachrichtenzähler $N_{R' \to R}^R$, Sitzungszähler $Z_{R' \to R}^R$

1. prüfe Sitzungsnummer $[Z \le N_{\max}]$, $[Z \ge Z_{R' \to R}^R] \to$ neue Sitzung starten

2. prüfe Nachrichtennummer $[N \le N_{\max};]$, $[N = N_{R \to R'}^R + 1]$

3. berechne $M' := \text{DEC } [K_{dec}^R, C, N]$

4. berechne $A' := \text{AUTH } [K_{ver}^R, N, M', |C|]$

5. prüfe *A = A'*

Im Folgenden wird das Protokoll für $\Delta > 0$, bei dem Pakete aufgrund der Redundanz in der höheren Schicht verloren gehen dürfen, beschrieben.

Im folgenden soll es erlaubt werden, dass Sequenzen von $\Delta > 0$ aufeinanderfolgender Nachrichten während der Übertragung verloren gehen dürfen, ohne dass ein Fehler angezeigt wird.

Dabei merkt sich der Sender eines Kanals die Sitzungsnummer $\hat{Z}$ und Nachrichtennummer $\hat{N}$ der letzten $\Delta$ Nachrichten und schickt in jeder Nachricht zusätzlich zum Paar (aktueller Sitzungszähler, aktueller Nachrichtenzähler) auch das Paar $(\hat{Z},\hat{N})$ mit. Der Empfänger auf der anderen Seite merkt sich den Sitzungszähler $\overline{Z}$ und Nachrichtenzähler $\overline{N}$ der jeweils letzten Nachricht, die er empfangen hat. Um zu prüfen, ob eine Sequenz von mehr als $\Delta$ aufeinanderfolgenden Nachrichten verloren gegangen ist, vergleicht der Empfänger die Pärchen $(\hat{Z},\hat{N})$ und $(\overline{Z},\overline{N})$ komponentenweise. Er kann dann entscheiden, ob der Sender nach der zuletzt empfangenen Nachricht noch mehr als $\Delta$ viele Nachrichten verschickt hat oder nicht.

Neue Sitzung starten

Eingabe:

gem. Schlüssel *K,* Rolle $R \in \{A,B\}$,
Sitzung $S \in \{'A \to B','B \to A'\}$

1. $Z_S^R \leftarrow Z_S^R + 1$ // größere Sprünge sollte nicht zugelassen werden

2. gemeinsame Sitzungsschlüssel berechnen

3. $N_S^R := 1$ // Initialisierung des Nachrichtenzählers

Beim Sender werden folgende Schritte ausgeführt. Nachricht verschicken

Eingabe: Nachricht *M*, Rolle $R \in \{A, B\}$, Nachrichtenzähler $N_{R \to R'}^R$, Sitzungszähler $Z_{R \to R'}^R$

alter Nachrichtenzähler der $\Delta$-letzten Nachricht $\hat{N}_{R \to R'}^R$

letzter Sitzungszähler der $\Delta$-letzten Nachricht $\hat{Z}_{R \to R'}^R$ Schritte, die ablaufen

1. Prüfe Nachrichtenzähler $N_{R \to R'}^R < N_{\max}$, sonst neue Sitzung starten

2. Erhöhe Nachrichtenzähler $N_{R \to R'}^{R} := N_{R \to R'}^{R} + 1$

3. $A := \text{AUTH} \; [K_{auth}^{R}, \; N_{R \to R'}^{R}, \; Z_{R \to R'}^{R}, \; \hat{N}_{R \to R'}^{R}, \; \hat{Z}_{R \to R'}^{R}, \; |M|, \; M]$

4. $C := \text{ENC} \; [K_{enc}^{R}, \; Z, \; N, \; M]$

5. Sende $(C, \; A, \; R, \; N_{R \to R'}^{R} \; Z_{R \to R'}^{R}, \; \hat{N}_{R \to R'}^{R}, \; \hat{Z}_{R \to R'}^{R})$

Beim Empfänger werden folgende Schritte ausgeführt.

Nachricht empfangen:

Eingabe: Chiffretext $C$, Authentisierung $A$, Rolle $R$,

aktueller Nachrichtenzähler $N_{R \to R'}^{R}$, aktueller Sitzungszähler $Z_{R \to R'}^{R}$

$\Delta$-letzter Nachrichtenzähler $\hat{N}_{R \to R'}^{R}$, $\Delta$-letzter Sitzungszähler $\hat{Z}_{R \to R'}^{R}$

letzter Sitzungszähler $\overline{Z}$, letzter Nachrichtenzähler $\overline{N}$ Schritte, die ablaufen

1. prüfe Sitzungsnummer $[Z \leq Z_{max}]$
2. prüfe Nachrichtennummer $[N \leq N_{max}]$

3. vergleiche Tupel $(\hat{Z}_{R \to R'}^{R}, \; \hat{N}_{R \to R'}^{R})$ mit $(\overline{Z}, \overline{N}) \to$ Fehler, mehr als $\Delta$ Nachrichten verloren

4. berechne $M' := \text{DEC} \; [K_{dec}^{R}, \; C, \; N]$

5. berechne $A' := \text{AUTH} \; [K_{auth}^{R}, \; N_{R \to R'}^{R}, \; Z_{R \to R'}^{R}, \; \hat{N}_{R \to R'}^{R}, \; \hat{Z}_{R \to R'}^{R}, \; |M|, M]$
6. prüfe $A = A'$

Im Folgenden wird auf die Figuren eingegangen, die bereits oben erwähnt wurden.

Die Figur 1 zeigt jeweils einen System PC, der über eine USB Schnittstelle mit einem Peripheriegerät, in diesem Falle einem Kartenlesegerät oder alternativ mit einem Geldausgabegerät (RM3), verbunden ist. Der System PC weist dabei unterschiedliche Schichten auf. Zuerst ist der USB Treiber zu nennen, der direkt auf der Hardware aufsetzt. Dann darüber ist die USB Transport-Schicht, die für die Übertragung der Daten dient und auf deren Schicht die Verschlüsselung erfolgt. Darüber ist ein Objekt Request Broker (ORB). Auf dem dann wiederum ein Java Treiber Kontroller (JDD) angeordnet. Weiterhin gibt es ein Kryptomodul, das Zugriff auf einen Sitzungsschlüssel hat, und somit einen sicheren Kanal bereitstellt. Der Sitzungsschlüssel wird von einem Basisschlüssel abgeleitet. Das Kartenlesegerät wiederum leitet ebenfalls seinen Sitzungsschlüssel von Basisschlüssel ab und weist einen ähnlichen Aufbau auf.

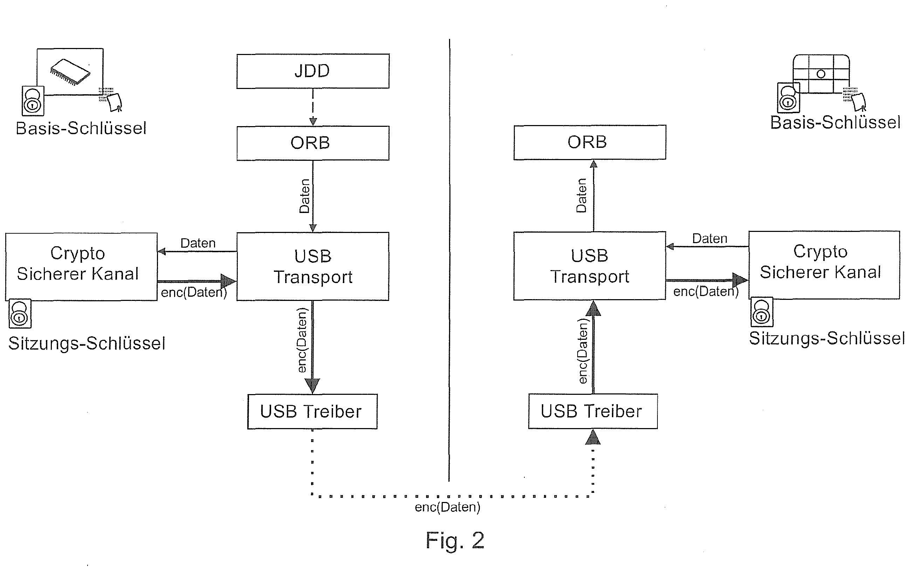

Die Figur 2 zeigt den Datenfluss zwischen den beiden Geräten in Bezug zu Fig. 1. Bis zum USB Transportschicht sind die Daten unverschlüsselt, um sie dann durch das Kryptomodul verschlüsseln zu lassen. Dann werden diese Daten verschlüsselt übertragen, um sie beim Empfängergerät wieder zu entschlüsseln.

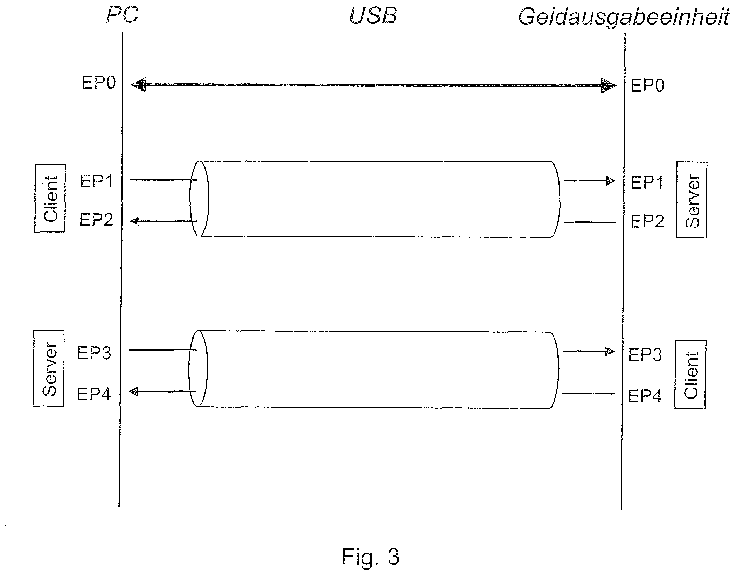

Die Figur 3 zeigt die USB Datenverbindung mit der unterschiedlichen aktiven und passiven Ausrichtung der Komponenten. Dies Sitzung EP0 ist z.B. unverschlüsselt. Die Sitzungen EP1 und EP2 sind verschlüsselt, wobei der PC der Client ist (passiv) und der RM3 ist als Server (aktiv). Die Sitzungen EP3 und EP4 wiederum sind ebenfalls verschlüsselt, wobei hier der PC der aktive ist und das Kartenlesegerät der passive Teilnehmer ist.

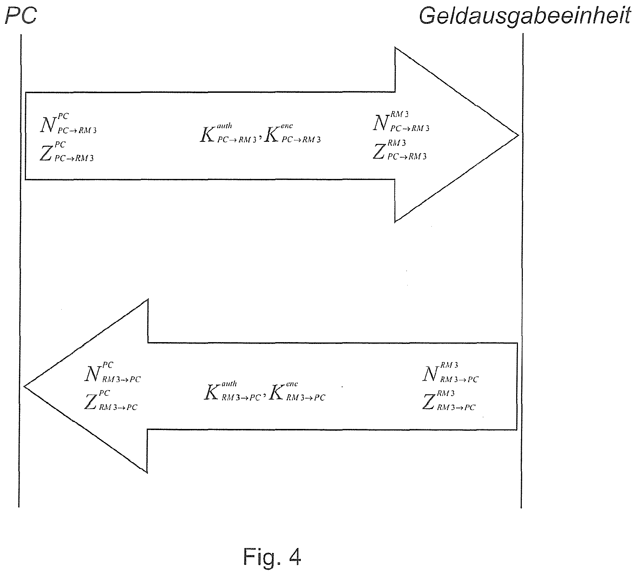

Auf der Basis der Figur 3 zeigt die Figur 4 die verschlüsselten Informationen, die zwischen den Geräten ausgetauscht werden, wobei jeweils ein entsprechender Verschlüsselungsschlüssel und ein Authentifizierungsschlüssel verwendet wird. Details sind oben beschrieben.

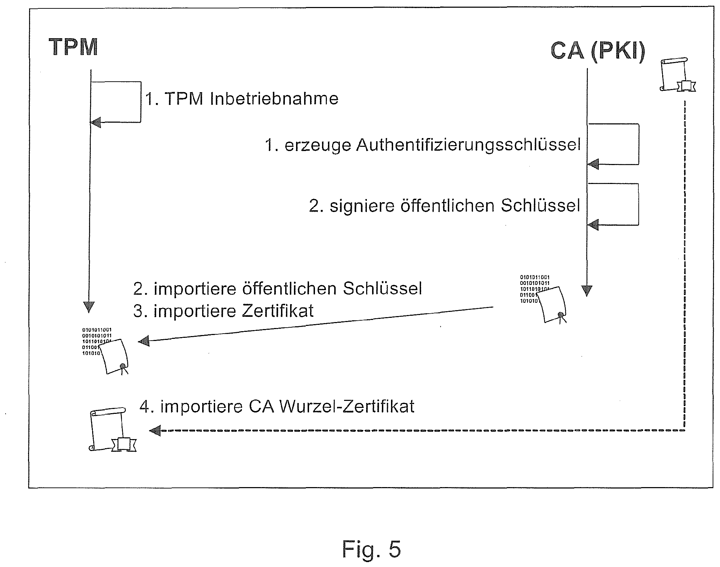

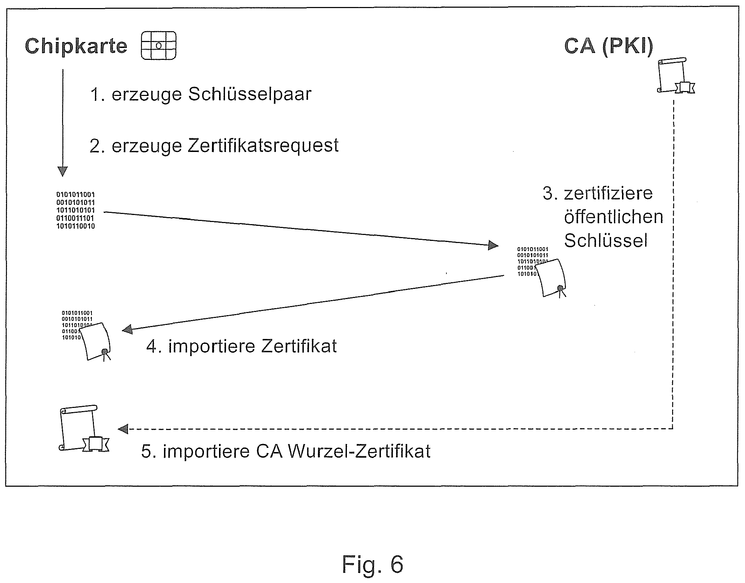

Die Figuren 5-7 zeigen die Erzeugung des gemeinsamen Schlüssels K, der bei einem ursprünglichen Zusammenbau der Vorrichtung erzeugt wird.

Die Figur 5 zeigt die Initialisierung des PC mit einem TPM Modul. Auf der Basis einer PKI (Public Key Infrastruktur) wird ein Authentifizierungsschlüssel erzeugt, dieser wird dann öffentlich signiert. Danach werden der öffentliche Schlüssel und ein entsprechendes Zertifikat importiert. Danach wird von der PKI das Wurzelzertifikat importiert. Alle diese Informationen werden im TPM abgelegt.

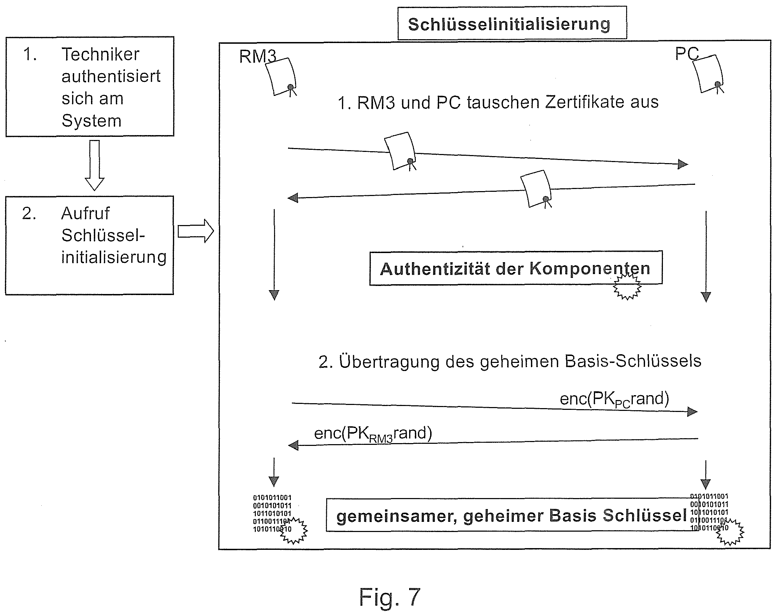

Beim RM 3 Modul beziehungsweise beim Chipkartenleser wird ein Schlüsselpaar erzeugt und es wird eine Anfrage an die PKI zur Zertifizierung eines öffentlichen Schlüssels gestellt. Dann wird dieser öffentliche Schlüssel zertifiziert und im nächsten Schritt wird dieser als Zertifikat wieder in die Komponente des Selbstbedienungs-Automaten importiert. Ferner wird das CA-Wurzel-Zertifikat der PKI importiert. Nachdem nun beide Komponenten vorbereitet wurden, werden diese miteinander verbunden und es werden die in Figur 7 beschriebenen Schritte durchgeführt. Ein Techniker Authentifiziert sich am System und fordert das System auf, eine Schlüsselinitialisierung durchzuführen. Danach kommunizieren die Komponenten miteinander. Die beiden Komponenten tauschen ihre Zertifikate aus und überprüfen dies. Wenn sich herausstellt, dass die Zertifikate korrekt sind, wird jeweils ein geheimer Basisschlüssel verschlüsselt übertragen. Auf diesem gemeinsamen Basisschlüssel K bauen die oben genannten Algorithmen auf.

**Patentansprüche**

1. Verfahren zur Absicherung der Kommunikation von Komponenten innerhalb von Selbstbedienungs-Automaten, vorzugsweise Geldautomaten, die über ein Bussystem, vorzugsweise USB, miteinander verbunden sind, mit einem Sender und einem Empfänger,
**gekennzeichnet dadurch, dass**
auf der Transportebene des Bussystems Daten als Tupel *(C,A,R,N,Z)* ausgetauscht werden,
wobei

   - *C* die mit einem Verschlüsselungsschlüssel $K^R_{enc}$ verschlüsselten Nachrichtendaten M sind,
   - *A* sind die mit einem Authentifizierungsschlüssel $K^R_{auth}$ authentifizierten Nachrichtendaten M,
   - *R* stellt die Rolle einer Komponente auf dem Bussystem aktiver oder passiver Teilnehmer dar auf dessen Basis K bestimmt wird,
   - *N* stellt einen Nachrichtenzähler dar, der in die Berechnung von *C* einfließt,
   - *Z* stellt einen Sitzungszähler dar, der spezifisch für die Rolle R ist, und der in die Berechnung vom Verschlüsselungsschlüssel $K^R_{enc}$ und vom Authentifizierungsschlüssel $K^R_{auth}$ einfließt..

2. Das Verfahren nach dem vorhergehenden Anspruch, wobei auf der Transportebene des Bussystems ein Tupel *(C, A,R,N,Z,$\hat{N}$,$\hat{Z}$) ist,* wobei
$\hat{N}$ ein Nachrichtenzähler der Δ-letzten Nachrichten N ist
und $\hat{Z}$ *ein letzter Sitzungszähler der* Δ-letzten Nachrichten.

3. Das Verfahren nach dem vorhergehenden Anspruch, wobei die Δ-letzten Nachrichten bei der Übertragung verloren gehen dürfen, ohne dass die darüber liegende Anwendungsschicht darüber informiert wird, dabei merkt sich der Sender eines Kanals die Sitzungsnummer $\hat{Z}$ und Nachrichtennummer $\hat{N}$ der letzen Δ-letzten Nachrichten und schickt in jeder Nachricht zusätzlich zum Paar (N,Z) als aktuellen Sitzungszähler auch das Paar ($\hat{Z}$ $\hat{N}$) mit, so dass eine Überprüfung beim Empfänger ermöglicht wird.

4. Das Verfahren nach dem vorhergehenden Anspruch, wobei für die Authentifizierung und/oder die Verschlüsselung ein gemeinsamer Schlüssel *K* verwendet wird, der bei der Herstellung und beim Zusammenbau des Selbstbedienungs-Automaten auf der Basis von Zertifikaten aus einer PKI erzeugt wurde und der sicher in den Komponenten abgelegt ist, wobei der Schlüssel *K* vorzugsweise in einem Trusted Platform Modul (TPM) abgelegt ist.

5. Das Verfahren nach einem oder mehreren der vorhergehenden vier Ansprüche, wobei
$$A := Auth\left[K^R_{auth},N,M,|M|\right],$$ wobei $K^R_{auth}$ Ergebnis eines Schlüsselerzeugungsverfahren mit einem gemeinsamen Schlüssel *K* ist, und/oder $$C := ENC\left[K^R_{enc},Z,N,M\right],$$ wobei $K^R_{enc}$ Ergebnis eines Schlüsselerzeugungsverfahren mit einem gemeinsamen Schlüssel *K* ist, wobei M die Nachrichtendaten sind.

6. Das Verfahren nach einem oder mehreren der vorhergehenden Ansprüche, wobei beim Senden folgende Schritte durchgeführt werden,
prüfen, ob der Nachrichtenzähler $N < N_{max}$, falls dies gegeben ist, setzen N:=N+1.

7. Das Verfahren nach einem oder mehreren der vorhergehenden Ansprüche, wobei beim Empfangen folgende Schritte durchgeführt werden, unter Berücksichtigung, dass der letzte Sitzungszähler $\overline{Z}$ und der letzte Nachrichtenzähler $\overline{N}$ ist,

   - prüfen, ob Sitzungsnummer $Z \leq Z_{max}$,
   - *prüfen, ob* Nachrichtennummer $N \leq N_{max}$

- Vergleichen der Tupel $(\hat{Z},\hat{N})$ und $(\overline{Z},\overline{N})$, sind mehr als $\Delta$ Nachrichten verloren gegangen, wird ein Fehler erzeugt, ansonsten,
- Durchführen einer Entschlüsselung
- Durchführen ein Authentifizierung

8. Das Verfahren nach dem vorhergehenden Anspruch, wobei die entschlüsselten Daten wie folgt berechnet werden,

wobei $M^{\cdot} := DEC\left[K_{dec}^{R}, C, N, \right]$ und die Authentifizierung gegeben ist, wenn A=A' wobei $A' := Auth\left[K_{ver}^{R}, N, M', |C|\right]$,

9. Selbstbedienungs-Automaten-Komponente, vorzugsweise für einen Geldautomaten, das einen Anschluss für ein Bussystem aufweist, vorzugsweise USB, über den es mit anderen Selbstbedienungs-Automaten-Komponenten verbunden ist,
**gekennzeichnet durch** eine Berechnungseinheit, die so eingerichtet und ausgebildet ist, dass
auf der Transportebene des Bussystems Daten als Tupel *(C,A,R,N,Z)* ausgetauscht werden,
wobei

- *C* die mit einem Verschlüsselungsschlüssel $K^{R}_{enc}$ verschlüsselten Nachrichtehdaten M sind,
- *A* sind die mit einem Authentifizierungsschlüssel $K^{R}_{auth}$ Authentifizierten Nachrichtendaten *M*,
- *R* stellt die Rolle einer Komponente auf dem Bussystem aktiver (Sender) oder passiver Teilnehmer (Empfänger) dar, auf dessen Basis *K* bestimmt wird,
- *N* stellt einen Nachrichtenzähler dar, der in die Berechnung von *C* einfließt,
- *Z* stellt einen Sitzungszähler dar, der spezifisch für die Rolle R ist, und der in die Berechnung vom Verschlüsselungsschlüssel $K^{R}_{enc}$ und vom Authentifizierungsschlüssel $K^{R}_{auth}$ einfließt.

10. Die Selbstbedienungs-Automaten-Komponente nach dem vorhergehenden Selbstbedienungs-Automaten-Komponenten-Anspruch, wobei Mittel vorhanden sind, um auf der Transportebene des Bussystem ein Tupel *(C,A,R,N,Z,$\hat{N}$,$\hat{Z}$)* auszutauschen, wobei
$\hat{N}$ ein Nachrichtenzähler der $\Delta$-letzten Nachrichten N ist
$\hat{Z}$ ein letzter Sitzungszähler der $\Delta$-letzten Nachrichten.

11. Die Selbstbedienungs-Automaten-Komponente nach dem vorhergehenden Selbstbedienungs-Automaten-Komponenten-Anspruch, wobei Mittel vorhanden sind, die erlauben, dass die $\Delta$-letzten Nachrichten bei der Übertragung verloren gehen dürfen, ohne dass die darüber liegende Anwendungsschicht darüber informiert wird, dabei merkt sich der Sender eines Kanals die Sitzungsnummer $\hat{Z}$ und Nachrichtennummer $\hat{N}$ der letzen $\Delta$-letzten Nachrichten und schickt in jeder Nachricht zusätzlich zum Paar *(N,Z)* als aktuellen Sitzungszähler auch das Paar *($\hat{Z}$,$\hat{N}$)* mit, so dass eine Überprüfung beim Empfänger ermöglicht wird.

12. Die Selbstbedienungs-Automaten-Komponente nach dem vorhergehenden Selbstbedienungs-Automaten-Komponenten-Anspruch, wobei die Berechnungseinheit für die Authentifizierung und/oder die Verschlüsselung einen gemeinsamen Schlüssel *K* einsetzt, wobei Mittel vorhanden sind, die bei der Herstellung und beim Zusammenbau des Selbstbedienungs-Automaten auf der Basis von Zertifikaten aus einer PKI den Schlüssel *K* erzeugen und sicher ablegen, und wobei vorzugsweise ein Trusted Plattform Modul (TPM) verwendet wird, in dem der Schlüssel *K* abgelegt ist.

13. Die Selbstbedienungs-Automaten-Komponente nach einem oder mehreren der vorhergehenden zwei Ansprüche, wobei die Berechnungseinheit die folgenden Werte bestimmt, $A := Auth\left[K_{auth}^{R}, N, M, |M|\right]$, wobei $K_{auth}^{R}$
Ergebnis ein sicheres Authentifizierungsverfahren mit einem gemeinsamen Schlüssel K ist,

und/oder $C := ENC\left[K_{enc}^{R}, Z, N, M\right]$, wobei $K_{enc}^{R}$ Ergebnis eines sicheren Verschlüsselungsverfahren mit einem gemeinsamen Schlüssel K ist.

14. Die Selbstbedienungs-Automaten-Komponente nach einem oder mehreren der vorhergehenden Selbstbedienungs-Automaten-Komponenten-Ansprüchen, wobei beim Sender die Berechnungseinheit so ausgebildet ist, dass sie folgende Schritte durchführt:

prüfen, ob der Nachrichtenzähler N < $N_{max}$, falls dies gegeben ist, setzen *N:=N+1.*

15. Die Selbstbedienungs-Automaten-Komponente nach einem oder mehreren der vorhergehenden Selbstbedienungs-Automaten-Komponenten-Ansprüche, wobei beim Empfänger die Berechnungseinheit so ausgebildet ist, dass folgende Schritte durchgeführt werden, unter Berücksichtigung, dass der letzte Sitzungszähler $\overline{Z}$ und der letzte Nachrichtenzähler $\overline{N}$ ist,

- prüfen, ob Sitzungsnummer $Z \leq Z_{max}$,
- prüfen, ob Nachrichtennummer $N \leq N_{max}$
- Vergleichen der Tupel $(\hat{Z},\hat{N})$ und $(\overline{Z},\overline{N})$, sind mehr als $\Delta$ Nachrichten verloren gegangen, wird ein Fehler erzeugt, ansonsten,
- durchführen einer Entschlüsselung
- durchführen ein Authentifizierung

16. Die Selbstbedienungs-Automaten-Komponente nach dem vorhergehenden Selbstbedienungs-Automaten-Komponenten-Anspruch, wobei die Berechnungseinheit die entschlüsselten Daten wie folgt berechnet,

$$M' := DEC\left[K_{dec}^{R}, C,\right]$$

und/oder die Authentifizierung ist gegeben, wenn A=A', wobei

$$A' := Auth\left[K_{ver}^{R}, N, M', |C|\right].$$

## Claims

1. Method for securing the communication of components inside self-service machines, preferably cash machines, which are connected to one another via a bus system, preferably USB, with a transmitter and a receiver, **characterized in that**
   data are interchanged as tuples $(C,A,R,N,Z)$ on the transport layer of the bus system, where

   - $C$ are the message data M encrypted using an encryption key $K^{R}_{enc}$,
   - $A$ are the message data M authenticated using an authentication key $K^{R}_{auth}$,
   - $R$ is the role of a component on the bus system of active or passive users, on the basis of which K is determined,
   - $N$ is a message counter which is included in the calculation of $C$,
   - $Z$ is a session counter which is specific to the role R and is included in the calculation of the encryption key $K^{R}_{enc}$ and the authentication key $K^{R}_{auth}$.

2. Method according to the preceding claim, wherein a tuple is $(C,A,R,N,Z,\hat{N},\hat{Z})$ on the transport layer of the bus system, where
   $\hat{N}$ is a message counter of the $\Delta$-last messages N, and $\hat{Z}$ is a last session counter of the $\Delta$-last messages.

3. Method according to the preceding claim, wherein the $\Delta$-last messages may be lost during transmission without the application layer above being informed, the transmitter of a channel remembers the session number $\hat{Z}$ and the message number $\hat{N}$ of the last $\Delta$-last messages and, in addition to the pair (N, Z) as the current session counter, also concomitantly sends the pair $(\hat{Z}, \hat{N})$ in each message, thus enabling a check in the receiver.

4. Method according to the preceding claim, wherein a common key $K$ is used for the authentication and/or the encryption, which key was generated on the basis of certificates from a PKI during the production and assembly of the self-service machine and is securely stored in the components, wherein the key $K$ is preferably stored in a trusted platform module (TPM).

5. Method according to one or more of the preceding four claims, wherein $A := Auth\left[K_{auth}^{R}, N, M, |M|\right]$, where

$K^R_{auth}$ is the result of a key generation method using a common key *K*, and/or $C := ENC\left[K^R_{enc}, Z, N, M\right]$, where

$K^R_{enc}$ is the result of a key generation method using a common key *K*, where M are the message data.

6. Method according to one or more of the preceding claims, wherein the following steps are carried out during transmission,
checking whether the message counter is N < $N_{max}$, and, if this is the case, setting N:=N+1.

7. Method according to one or more of the preceding claims, wherein the following steps are carried out during reception, taking into account the fact that the last session counter is $\overline{Z}$ and the last message counter is $\overline{N}$,

   - checking whether the session number is Z $\leq$ $Z_{max}$,
   - checking whether the message number is N $\leq$ $N_{max}$,
   - comparing the tuples $(\hat{Z}, \hat{N})$ and $(\overline{Z}, \overline{N})$ ; if more than $\Delta$ messages are lost, an error is generated, otherwise
   - carrying out decryption,
   - carrying out authentication.

8. Method according to the preceding claim, wherein the decrypted data are calculated as follows, wherein

   $M^\smallfrown := DEC\left[K^R_{dec}, C, N,\right]$ and the authentication is successful if A=A', where $A' := Auth\left[K^R_{ver}, N, M', |C|\right]$ .

9. Self-service machine component, preferably for a cash machine, which has a connection for a bus system, preferably USB, via which it is connected to other self-service machine components,
**characterized by** a calculation unit which is configured and designed in such a manner that data are interchanged as tuples (*C,A,R,N,Z*) on the transport layer of the bus system,
where

   - *C* are the message data M encrypted using an encryption key $K^R_{enc}$,
   - *A* are the message data *M* authenticated using an authentication key $K^R_{auth}$,
   - *R* is the role of a component on the bus system of active (transmitter) or passive users (receiver), on the basis of which *K* is determined,
   - *N* is a message counter which is included in the calculation of *C*,
   - *Z* is a session counter which is specific to the role R and is included in the calculation of the encryption key $K^R_{enc}$ and the authentication key $K^R_{auth}$.

10. Self-service machine component according to the preceding self-service machine component claim, wherein means are provided in order to interchange a tuple (*C,A,R,N,Z*, $\hat{N}$,$\hat{Z}$) on the transport layer of the bus system, where $\hat{N}$ is a message counter of the $\Delta$-last messages N, and $\hat{Z}$ is a last session counter of the $\Delta$-last messages.

11. Self-service machine component according to the preceding self-service machine component claim, wherein means are provided which allow the $\Delta$-last messages to be lost during transmission without the application layer above being informed, the transmitter of a channel remembers the session number $\hat{Z}$ and the message number $\hat{N}$ of the last $\Delta$-last messages and, in addition to the pair (N, Z) as the current session counter, also concomitantly sends the pair ($\hat{Z}$, $\hat{N}$) in each message, thus enabling a check in the receiver.

12. Self-service machine component according to the preceding self-service machine component claim, wherein the calculation unit uses a common key *K* for the authentication and/or the encryption, wherein means are provided which generate the key *K* on the basis of certificates from a PKI during the production and assembly of the self-service machine and securely store it, and wherein a trusted platform module (TPM) in which the key *K* is stored is preferably used.

13. Self-service machine component according to one or more of the preceding two claims, wherein the calculation unit determines the following values: $A := Auth\left[K^R_{auth}, N, M, |M|\right]$, where $K^R_{auth}$ is the result of a secure authentication method using a common key K, and/or $C := ENC\left[K_{enc}^{R}, Z, N, M\right]$, where $K_{enc}^{R}$ is the result of a secure encryption method using a common key K.

**14.** Self-service machine component according to one or more of the preceding self-service machine component claims, wherein the calculation unit is designed in the transmitter in such a manner that it carries out the following steps:

checking whether the message counter is $N < N_{max}$, and, if this is the case, setting $N:=N+1$.

**15.** Self-service machine component according to one or more of the preceding self-service machine component claims, wherein the calculation unit is designed in the receiver in such a manner that the following steps are carried out, taking into account the fact that the last session counter is $\overline{Z}$ and the last message counter is $\overline{N}$,

- checking whether the session number is $Z \leq Z_{max}$,
- checking whether the message number is $N \leq N_{max}$,
- comparing the tuples $(\hat{Z}, \hat{N})$ and $(\overline{Z}, \overline{N})$; if more than $\Delta$ messages are lost, an error is generated, otherwise
- carrying out decryption,
- carrying out authentication.

**16.** Self-service machine component according to the preceding self-service machine component claim, wherein the calculation unit calculates the decrypted data as follows

$$M^{\cdot} := DEC\left[K_{dec}^{R}, C, N,\right]$$

and/or
the authentication is successful if A=A', where

$$A' := Auth\left[K_{ver}^{R}, N, M', |C|\right].$$

**Revendications**

**1.** Procédé pour sécuriser la communication de composants à l'intérieur de distributeurs en libre-service, de préférence des guichets automatiques de banque, qui sont reliés entre eux par le biais d'un système de bus, de préférence USB, comprenant un émetteur et un récepteur,
**caractérisé en ce que**
des données sous forme de tuples (C, A, R, N, Z) sont échangées sur le plan de transport du système de bus,

- C désignant les données de message M chiffrées avec une clé de chiffrement $K^{R}_{enc}$,
- A désignant les données de message M authentifiées avec une clé d'authentification $K^{R}_{auth}$,
- R représentant le rôle d'un composant sur le système de bus de périphériques actifs ou passifs sur la base duquel est définie K,
- N représentant un compteur de messages qui intervient dans le calcul de C,
- Z représentant un compteur de sessions qui est spécifique pour le rôle R et qui intervient dans le calcul de la clé de chiffrement $K^{R}_{enc}$ et de la clé d'authentification $K^{R}_{auth}$.

**2.** Procédé selon la revendication précédente, un tuple (C, A, R, N, Z, $\hat{N}$, $\hat{Z}$) se trouvant sur le plan de transport du système de bus,
$\hat{N}$ désignant un compteur de messages des $\Delta$ messages N avant le dernier
et $\hat{Z}$ désignant un dernier compteur de session des $\Delta$ messages N avant le dernier.

**3.** Procédé selon la revendication précédente, la perte des $\Delta$ messages avant le dernier étant autorisée lors de la transmission sans que la couche d'application qui se trouve au-dessus en soit informée, l'émetteur d'un canal mémorisant ici le numéro de session $\hat{Z}$ et le numéro de message $\hat{N}$ des derniers $\Delta$ messages avant le dernier et envoyant dans chaque message, en plus de la paire (N, Z) en tant que compteur de sessions actuel, également la paire $(\hat{Z}, \hat{N})$, de sorte qu'un contrôle soit rendu possible au niveau du récepteur.

4. Procédé selon la revendication précédente, une clé commune K étant utilisée pour l'authentification et/ou le chiffrement, laquelle ayant été générée à partir d'une PKI lors de la fabrication et lors de l'assemblage du distributeur en libre-service sur la base de certificats et laquelle est stockée de manière sécurisée dans les composants, la clé K étant de préférence stockée dans un module de plate-forme de confiance (TPM).

5. Procédé selon une ou plusieurs des quatre revendications précédentes, selon lequel A = Auth[$K^R_{auth}$, N, M, IMI], $K^R_{auth}$ désignant le résultat d'un procédé de génération de clé avec une clé commune K, et/ou
C = ENC [$K^R_{enc}$, Z, N, M], $K^R_{enc}$ désignant le résultat d'un procédé de génération de clé avec une clé commune K, M désignant les données de message.

6. Procédé selon une ou plusieurs des revendications précédentes, les étapes suivantes étant exécutées lors de l'émission :

   contrôle si le compteur de messages $N < N_{max}$,
   dans l'affirmative, fixer N = N+1.

7. Procédé selon une ou plusieurs des revendications précédentes, les étapes suivantes étant exécutées lors de la réception, en tenant compte du fait que le dernier compteur de sessions est $\overline{Z}$ et le dernier compteur de messages est $\overline{N}$,

   - contrôle si le numéro de session $Z \le Z_{max}$,
   - contrôle si le numéro de message $N \le N_{max}$,
   - comparaison des tuples $(\hat{Z}, \hat{N})$ et $(\overline{Z}, \overline{N})$, si plus de $\Delta$ messages ont été perdus, une erreur est générée, sinon
   - réalisation d'un déchiffrement,
   - réalisation d'une authentification.

8. Procédé selon la revendication précédente, les données déchiffrées étant calculées comme suit : M' = DEC[$K^R_{enc}$, C, N] et l'authentification étant avérée si A = A', avec A' = Auth[$K^R_{ver}$, N, M', |C|].

9. Composant de distributeur en libre-service, de préférence un guichet automatique de banque, qui possède un raccordement pour un système de bus, de préférence USB, par le biais duquel il est relié à d'autres composants de distributeur en libre-service, **caractérisé par** une unité de calcul qui est conçue et configurée de telle sorte que des données sous forme de tuples (C, A, R, N, Z) sont échangées sur le plan de transport du système de bus,

   - C désignant les données de message M chiffrées avec une clé de chiffrement $K^R_{enc}$,
   - A désignant les données de message M authentifiées avec une clé d'authentification $K^R_{auth}$,
   - R représentant le rôle d'un composant sur le système de bus de périphériques actifs (émetteurs) ou passifs (récepteurs) sur la base duquel est définie K,
   - N représentant un compteur de messages qui intervient dans le calcul de C,
   - Z représentant un compteur de sessions qui est spécifique pour le rôle R et qui intervient dans le calcul de la clé de chiffrement $K^R_{enc}$ et de la clé d'authentification $K^R_{auth}$.

10. Composant de distributeur en libre-service selon la revendication de composant de distributeur en libre-service précédente, des moyens étant présents pour échanger un tuple (C, A, R, N, Z, $\hat{N}$, $\hat{Z}$) sur le plan de transport du système de bus,
$\hat{N}$ désignant un compteur de messages des $\Delta$ messages N avant le dernier
et $\hat{Z}$ désignant un dernier compteur de session des $\Delta$ messages N avant le dernier.

11. Composant de distributeur en libre-service selon la revendication de composant de distributeur en libre-service précédente, des moyens étant présents qui permettent que la perte des $\Delta$ messages avant le dernier soit autorisée lors de la transmission sans que la couche d'application qui se trouve au-dessus en soit informée, l'émetteur d'un canal mémorisant ici le numéro de session $\hat{Z}$ et le numéro de message $\hat{N}$ des derniers $\Delta$ messages avant le dernier et envoyant dans chaque message, en plus de la paire (N, Z) en tant que compteur de sessions actuel, également la paire $(\hat{Z}, \hat{N})$, de sorte qu'un contrôle soit rendu possible au niveau du récepteur.

**12.** Composant de distributeur en libre-service selon la revendication de composant de distributeur en libre-service précédente, l'unité de calcul utilisant une clé commune K pour l'authentification et/ou le chiffrement, des moyens étant présents qui génèrent la clé K à partir d'une PKI lors de la fabrication et lors de l'assemblage du distributeur en libre-service sur la base de certificats et la stockent de manière sécurisée, et un module de plate-forme de confiance (TPM) dans lequel est stockée la clé K étant de préférence utilisé.

**13.** Composant de distributeur en libre-service selon une ou plusieurs des deux revendications précédentes, l'unité de calcul déterminant les valeurs suivantes :

$A = \mathrm{Auth}[K^R_{auth}, N, M, |M|]$, $K^R_{auth}$ désignant le résultat d'un procédé d'authentification avec une clé commune K, et/ou
$C = \mathrm{ENC}[K^R_{enc}, Z, N, M]$, $K^R_{enc}$ désignant le résultat d'un procédé de chiffrage sécurisé avec une clé commune K.

**14.** Composant de distributeur en libre-service selon une ou plusieurs des revendications de composant de distributeur en libre-service précédentes, l'unité de calcul au niveau de l'émetteur étant configurée de telle sorte qu'elle exécute les étapes suivantes :

contrôle si le compteur de messages $N < N_{max}$,
dans l'affirmative, fixer $N = N+1$.

**15.** Composant de distributeur en libre-service selon une ou plusieurs des revendications de composant de distributeur en libre-service précédentes, l'unité de calcul au niveau du récepteur étant configurée de telle sorte que les étapes suivantes sont exécutées lors de la réception, en tenant compte du fait que le dernier compteur de sessions est $\overline{Z}$ et le dernier compteur de messages est $\overline{N}$,

- contrôle si le numéro de session $Z \leq Z_{max}$,
- contrôle si le numéro de message $N \leq N_{max}$,
- comparaison des tuples $(\hat{Z}, \hat{N})$ et $(\overline{Z}, \overline{N})$, si plus de $\Delta$ messages ont été perdus, une erreur est générée, sinon
- réalisation d'un déchiffrement,
- réalisation d'une authentification.

**16.** Composant de distributeur en libre-service selon la revendication de composant de distributeur en libre-service précédente, l'unité de calcul calculant les données déchiffrées comme suit :

$$\mathrm{M'} = \mathrm{DEC}[\mathrm{K^R_{enc}, C,}]$$

et/ou
l'authentification étant avérée si A = A', avec

$$\mathrm{A'} = \mathrm{Auth}[\mathrm{K^R_{ver}, N, M', |C|}].$$

System PC                                          Geldausgabeeinheit

Basis-Schlüssel                                    Basis-Schlüssel

| JDD |

| Crypto Sicherer Kanal |   | ORB |

Sitzungs-Schlüssel

| USB Transport |

| USB Treiber |

| ORB |   | Crypto Sicherer Kanal |

| USB Transport |   Sitzungs-Schlüssel

| USB Treiber |

Fig. 1

EP 2 377 062 B1

Fig. 2

Fig. 3

PC                                          Geldausgabeeinheit

$N_{PC \to RM3}^{PC}$
$Z_{PC \to RM3}^{PC}$      $K_{PC \to RM3}^{auth}, K_{PC \to RM3}^{enc}$      $N_{PC \to RM3}^{RM3}$
                                                     $Z_{PC \to RM3}^{RM3}$

$N_{RM3 \to PC}^{PC}$
$Z_{RM3 \to PC}^{PC}$      $K_{RM3 \to PC}^{auth}, K_{RM3 \to PC}^{enc}$      $N_{RM3 \to PC}^{RM3}$
                                                     $Z_{RM3 \to PC}^{RM3}$

Fig. 4

Fig. 5

**Chipkarte** ▦

1. erzeuge Schlüsselpaar

2. erzeuge Zertifikatsrequest

**CA (PKI)**

0101011001
0010101011
1011010101
0110011101
1010110010

3. zertifiziere öffentlichen Schlüssel

0101011001
0010101011
1011010101
01100
101010

0101011001
0010101011
1011010101
01100
101010

4. importiere Zertifikat

5. importiere CA Wurzel-Zertifikat

Fig. 6

## Schlüsselinitialisierung

| 1. | Techniker authentisiert sich am System |
|---|---|

⇩

| 2. | Aufruf Schlüssel-initialisierung |
|---|---|

⇨

RM3      PC

1. RM3 und PC tauschen Zertifikate aus

**Authentizität der Komponenten**

2. Übertragung des geheimen Basis-Schlüssels

$enc(PK_{PC}rand)$

$enc(PK_{RM3}rand)$

0101011001
0010101011
1011010101
0110011101
1010110010

**gemeinsamer, geheimer Basis Schlüssel**

0101011001
0010101011
1011010101
0110011101
1010110010

## Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1612747 A

- US 6789730 B1

**In der Beschreibung aufgeführte Nicht-Patentliteratur**

- Computer Networks. **ED-MENEZESA ; OOR-SCHOT VAN P ; VANSTONE S.** Handbook of applied cryptorgrapny